# EUROPÄISCHE PATENTSCHRIFT

(11) **EP 3 458 920 B1**
(45) Veröffentlichungstag und Bekanntmachung des Hinweises auf die Patenterteilung: **08.09.2021**
(21) Anmeldenummer: 16725079.4
(22) Anmeldetag: 19.05.2016
(51) Int. Cl.: G05B 19/042, G05B 15/02

(54) **VERFAHREN, STEUERVORRICHTUNG UND COMPUTERPROGRAMMPRODUKT ZUM STEUERN EINES GERÄTES AUF BASIS EINER MEDIENDATEI**
METHOD AND CONTROL DEVICE FOR CONTROLLING AN APPPLIANCE ON THE BASIS OF A MEDIA FILE, COMPUTER PROGRAM PRODUCT, AND BUILDING AUTOMATION SYSTEM
PROCÉDÉ ET DISPOSITIF DE COMMANDE D'UN APPAREIL SUR LA BASE D'UN FICHIER MULTIMÉDIA, PRODUIT PROGRAMME D'ORDINATEUR ET SYSTÈME IMMOTIQUE

(43) Veröffentlichungstag der Anmeldung: 27.03.2019
(73) Patentinhaber: Aizo Group AG, 8952 Schlieren (CH)
(72) Erfinder: VESPER, Martin, 42399 Wuppertal (DE)
(74) Vertreter: Hepp Wenger Ryffel AG
(86) Internationale Anmeldenummer: PCT/EP2016/061196
(87) Internationale Veröffentlichungsnummer: WO 2017/198300

(56) Entgegenhaltungen:
- WO-A1-2016/034236
- WO-A1-2016/053264
- DE-A1- 10 340 580
- DE-A1-102010 060 650

## Beschreibung

Die vorliegende Erfindung betrifft ein Verfahren und eine Steuervorrichtung zum Steuern eines in ein Gebäudeautomationssystem eingebundenen Gerätes auf Basis einer Mediendatei, ein Computerprogrammprodukt zur Auswertung der Mediendatei sowie ein Gebäudeautomationssystem gemäss den unabhängigen Ansprüchen.

Aus dem Stand der Technik ist bekannt, ausgehend von einer auf einem Gerät abgespielten Videodatei, welche zusätzliche Informationen enthält, angeschlossene Geräte einzuschalten und/oder am angeschlossenen Gerät ein entsprechendes voreingestelltes Programm zu aktivieren.

Nachteilig an diesen Systemen ist, dass die Videodatei bereits mit den benötigten Zusatzinformationen versehen werden muss und das zu steuernde Gerät bereits die zur Ablaufsteuerung benötigten Programmdaten enthalten muss. Entsprechend können mit solchen Videos bzw. mit den entsprechenden Geräten nur die jeweils vorbestimmten Programme angestossen werden. WO2016/053264 zeigt eine Mediendatei, die Steuerungsdaten enthält, DE 103 40 580 zeigt eine Spracheingabe zur Steuerung einer Set-Top-Box, WO 2016/034236 befasst sich mit der Konfiguration eines Gebäudeautomationssystems mittels Spracheingabe, und DE 10 2010 060650 offenbart eine Küchenmaschine, bei der Rezepte durch den Bediener editiert werden können.

Es ist Aufgabe der Erfindung, die Nachteile des Standes der Technik zu überwinden. Insbesondere soll ein Verfahren, eine Steuervorrichtung, ein Computerprogrammprodukt und ein Gebäudeautomationssystem zur Verfügung gestellt werden, welche ausgehend von einer beliebigen Mediendatei ein Gerät möglichst flexibel steuern kann.

Diese Aufgabe wird durch die in den unabhängigen Patentansprüchen definierten Verfahren und Vorrichtungen gelöst. Weitere Ausführungsformen ergeben sich aus den abhängigen Patentansprüchen.

In der nachfolgenden Beschreibung wird unter dem Begriff System jegliche Art eines elektronischen Netzwerks verstanden, in dem ein Datentransfer, insbesondere Datenaustausch zwischen den Elementen des Systems ermöglicht ist. Dieser Datentransfer oder Datenaustausch kann über eine Drahtverbindung, eine faseroptische Verbindung, optisch, z.B. Infrarot, über Funk oder mittels PLC erfolgen. Beispielsweise kann ein solches Netzwerk ein Gebäudeautomationssystem sein, welches unterschiedliche Geräte miteinander vernetzt und es erlaubt, diese sowohl zentral als auch dezentral zu steuern.

Unter einer Mediendatei wird beispielsweise ein Video, ein Podcast, ein Livestream, eine Bilderstrecke usw. verstanden, welche nicht zwingend mit spezifischen Steuerdaten für Geräte versehen sind.

Ein erfindungsgemässes Verfahren zum Steuern wenigstens eines in ein Gebäudeautomationssystem eingebundenen Gerätes mit einer Steuervorrichtung umfasst die in Anspruch 1 offenbarten Schritte.

In diesem Zusammenhang wird unter der Analyse der Mediendatei verstanden, dass der Kontext der Mediendatei automatisch erkannt wird und entsprechend der Inhalt der Mediendatei ausgewertet wird. Beispielsweise wird mit einer solchen Analyse eine gesprochene Information zur Ofentemperatur in einer Videoanleitung eines Kuchenrezeptes erkannt und diese Information aus der Mediendatei extrahiert. Die so gewonnene Information kann nun weiter verwendet werden. Für die Analyse werden Algorithmen der Spracherkennung, der Bilderkennung, der Gesten- und Mimikerkennung und/oder weitere bekannte Algorithmen verwendet.

Die für die Steuerung relevanten Informationen hängen vom Inhalt der Mediendatei und den zu steuernden Geräten ab. Beispielsweise werden aus einem Rezept zum Backen eines Kuchens andere Informationen extrahiert als aus einer Anleitung zum Installieren eines Sonos-Lautsprechers oder aus einer geführten Installation in einem Gebäude, wo unterschiedliche Steuerelemente wie beispielsweise Dimmer und Lampen in einer Reihenfolge korrekt installiert und diese zum Test vom System angeblinkt werden und/oder zur Bestätigung und/oder Überprüfung der Installation Tasten gedrückt werden müssen.

Ein solches Verfahren erlaubt beispielsweise, dass der Benutzer eine Mediendatei im Internet oder aus seinem privaten Speicher abruft und anhand dieser Mediendatei seine beispielsweise in einem Gebäudeautomationssystem eingebundenen Geräte direkt ansteuert. Der Benutzer muss somit nicht mehr selber im Gebäudeautomationssystem die zur Steuerung benötigten Daten eingeben, sondern diese werden automatisch aus der Mediendatei extrahiert und die entsprechenden Geräte angesteuert. Beispielsweise wird somit ein Rezept zum Backen eines Kuchens ausgewertet, die zum Backen benötigte Temperatur im Ofen eingestellt, das Rührwerk der Teigknetmaschine automatisch betätigt und ein Timer im Ofen auf die entsprechende zum Backen benötigte Backzeit eingestellt. Der Benutzer muss lediglich die Zutaten in die Teigknetmaschine zugeben, den fertiggestellten Teig in eine Backform füllen und die Backform in den Ofen schieben. Beim Einschieben des Teiges in den Ofen und Schliessen der Ofentür kann der Timer automatisch gestartet werden. Selbstverständlich sind hierbei auch weniger oder weitere Teilautomatisierungen möglich.

Das Gerät kann der Steuervorrichtung Rückmeldungen geben, welche insbesondere Informationen zum Status des Gerätes beinhalten. So kann beispielsweise im vorbeschriebenen Beispiel die Teigknetmaschine der Steuervorrichtung zurückmelden, wenn der Teig genügend durchgeknetet und entsprechend eine homogene Masse erstellt ist. Eine solche Rückmeldung kann beispielsweise den weiteren Ablauf der Mediendatei steuern. Im Falle des Kuchenrezeptes kann der Benutzer angewiesen werden, den Teig in die entsprechende Backform einzufüllen und die Backform mit dem Teig in den Ofen zu schieben. Ebenso ist es denkbar, dass eine solche Rückmeldung vom Ofen beispielsweise beinhaltet, dass sich der Teig jetzt im Ofen befindet. Eine solche Rückmeldung kann durch entsprechende Sensoren im Gerät ausgelöst werden. Die Verwendung solcher Rückmeldungen erlaubt ein effizientes Abarbeiten der entsprechenden Informationen, welche aus der Mediendatei extrahiert wurden.

Die Steuerung des Ablaufs der Mediendatei kann einen oder Kombinationen der folgenden Schritte umfassen:
- Stoppen des Ablaufs,
- Vorspringen im Ablauf an eine bestimmte Stelle,
- Rückspringen im Ablauf an eine bestimmte Stelle,
- Unterbrechen des Ablaufs,
- Weiterführen des Ablaufs,
- Auswahl und/oder Aufruf einer weiteren Mediendatei.

Durch die Beeinflussung des Ablaufs der Mediendatei kann beispielsweise sichergestellt werden, dass Instruktionen, welche an den Benutzer gerichtet sind und nicht ausgeführt wurden, wiederholt als Instruktion an den Benutzer ausgegeben werden. Ebenso ist es im vorgenannten Beispiel beim Schliessen oder Ofentür nach dem Einbringen des Teiges in den Ofen nötig, dass der Ablauf der Mediendatei solange unterbrochen wird, bis die entsprechende Backzeit abgelaufen ist. Weiter ist es jedoch auch denkbar, dass aufgrund einer solchen Rückmeldung eine weitere Mediendatei ausgewählt und/oder aufgerufen wird, ohne dass der Benutzer hierzu weitere Aktionen betätigt. So kann das System beispielsweise erkennen, dass sich der Benutzer nicht instruktionsgemäss verhält und weitere erklärende Mediendateien zur Verfügung stellen.

Die Analyse der Mediendatei kann in Echtzeit erfolgen. Im Falle eines Videos ist es somit möglich, dass der Benutzer das Video betrachtet und die entsprechenden Analysen im Hintergrund in Echtzeit durchgeführt werden. Wie vorgängig erwähnt wird beispielsweise im Video erklärt, dass der Ofen auf 200 Grad eingestellt werden muss. Diese Information wird ausgewertet und direkt an den Ofen übermittelt. Alternativ ist es jedoch auch denkbar, dass die Analyse der Mediendatei unabhängig vom Ablauf der Mediendatei erfolgt. Eine solche vom Ablauf unabhängige Analyse erlaubt es beispielsweise, dass im Falle eines Videos dieses bereits vor und/oder während des Ablaufs komplett analysiert wird, sodass nötigenfalls bereits mögliche Sprungpositionen erkannt werden.

Zur Analyse der Mediendatei und zur Extraktion der Informationen können Zusatzinformationen der Mediendatei, wie beispielsweise Metadaten, Tags, Schlagworte, usw. ausgewertet werden. Insbesondere ist so ermöglicht, dass sowohl akustische, visuelle als auch zusätzliche der Mediendatei beigefügte Informationen ausgewertet werden.

Das Aussenden der Steuerbefehle an das wenigstens eine Gerät erfolgt über das Gebäudeinformationssystem. Entsprechend muss nicht die Steuervorrichtung direkt mit den zu steuernden Geräten verbunden oder verbindbar sein, sondern muss lediglich mit seinem zugeordneten System kommunizieren können. Das zu steuernde wenigstens eine Gerät ist bereits in dieses System eingebunden, sodass die Ansteuerung wesentlich vereinfacht wird.

Ein weiterer Aspekt der vorliegenden Erfindung betrifft ein Computerprogrammprodukt zur Auswertung einer Mediendatei. Ein erfindungsgemässes Computerprogrammprodukt für die Gebäudeautomation extrahiert, wenn es auf einem Computer ausgeführt wird, Informationen aus einer Mediendatei, um auf Basis dieser extrahierten Information wenigstens ein Gerät in einem Gebäudeautomationssystem steuern zu können.

Unter einem Computerprogrammprodukt wird hier beispielsweise eine App auf einem Smartphone, einem Tablet Computer, einem Notebook usw. verstanden. Der Computer wird dabei entsprechend auch als Smartphone, Tablet Computer, Notebook, PC oder als Cloud-Service verstanden. Entsprechend ist es denkbar, dass das Computerprogrammprodukt nicht auf einem Gerät des Benutzers ausgeführt wird, sondern dass die entsprechende Mediendatei beispielsweise über eine Internetverbindung in einem Cloud-Service geladen wird und dort die entsprechenden Informationen extrahiert werden. Die extrahierten Informationen zum Steuern des wenigstens einen Gerätes können dann wiederum über das Internet dem Benutzer bzw. dem System zur Verfügung gestellt werden.

Zur Extraktion der Informationen werden erfindungsgemäß Audiodaten und/oder Videodaten und/oder Textdaten und/oder Zusatzinformationen der Mediendatei ausgewertet. Wiederum wird somit ermöglicht, dass die Mediendatei akustisch, visuell als auch anhand ihrer Zusatzinformationen wie beispielsweise Metadaten, Tags, Schlagworte, usw. ausgewertet wird.

Eine erfindungsgemässe Steuervorrichtung, insbesondere für ein Verfahren wie vorgängig geschildert, zum Steuern wenigstens eines in ein Gebäudeautomationssystem eingebundenen Gerätes umfasst eine Mediendatenschnittstelle, Bedienelemente für einen Benutzer zum Auswählen und/oder Aufrufen einer Mediendatei, eine Anzeigeeinheit zum Anzeigen der ausgewählten Mediendatei, eine Analyseeinheit, insbesondere mit einem Computerprogrammprodukt wie vorgängig beschrieben, zum Analysieren und Extrahieren von Steuerinformationen aus der Mediendatei und eine Schnittstelle zu einem System, insbesondere zu einem Gebäudeautomationssystem. Unter einer Steuervorrichtung wird hierbei beispielsweise ein Smartphone, ein Tablet Computer, ein Notebook, ein PC oder ein Computer in einer beliebigen Form sowie ein netzgebundener Speicher (NAS), ein Router oder ein Server verstanden. Ebenfalls wird unter einer Steuervorrichtung auch eine Set-Top-Box, beispielsweise d-box, Dreambox, Mediabox, ReelBox, TiVo-PVR, AppleTV, Met@box, usw. oder eine Videospielkonsole, beispielsweise SNES, Playstation, X-Box, usw. verstanden. Die Bedienelemente, die Anzeigeeinheit und die Analyseeinheit müssen nicht zwingend in der Steuervorrichtung integriert sein sondern können über ein entsprechendes Anschlusselement, z.B. kabelgebunden und/oder drahtlos an die Steuervorrichtung angebunden werden.

Eine Mediendatenschnittstelle stellt beispielsweise eine Verbindung zu einer Videojukebox, einem Medienplayer, einem Speicher, einem Cloud-Service oder eine Anbindung an das Internet dar. Unter einer Mediendatenschnittstelle wird explizit nicht nur eine physische Schnittstelle als Steckverbinder oder als drahtlosen Anschluss verstanden, sondern jede Möglichkeit der Datenaufnahme, insbesondere eine Kamera. Diese Schnittstelle erlaubt den Zugriff auf die ausgewählte und/oder aufgerufene Mediendatei. Eine Kamera beispielsweise erlaubt es einem Benutzer ein herkömmliches Rezept aus einem Buch zu fotografieren und der Steuervorrichtung zur Analyse zur Verfügung zu stellen.

Unter einer Analyseeinheit wird eine App oder ein Programmcode verstanden, welcher auf der Steuervorrichtung oder allenfalls auf einem speziellen Chip der Steuervorrichtung abläuft. Die Analyse der Mediendatei kann auch in einem Cloud-Service erfolgen. Somit wäre dieser Teil des Cloud-Dienstes die Analyseeinheit, welche im Sinne der vorliegenden Erfindung über die Anschlussmöglichkeit der Steuervorrichtung eingebunden werden kann.

Auch der Begriff der Schnittstelle zum System soll nicht zwingend als physische Schnittstelle betrachtet werden. Auch hier ist wiederum eine drahtlose Anbindung oder aber eine Anbindung über das Internet oder einen Cloud-Dienst an das System denkbar.

Eine solche Steuervorrichtung ist beispielsweise in der Lage, eine vom Benutzer ausgewählte Videodatei anzuzeigen und gleichzeitig und/oder vorgängig nach Informationen zu analysieren, welche zur Steuerung eines mit dem System verbundene oder in dieses System eingebundenen Gerätes dienen können.

Die Schnittstelle zum System kann unidirektional oder bidirektional ausgebildet sei. Bei einer bidirektionalen Ausbildung ist es beispielsweise möglich, dass das zu steuernde Gerät eine Rückmeldung, beispielsweise über seinen Status, an die Steuervorrichtung zurückgibt. Entsprechend kann die Steuervorrichtung beispielsweise das Abspielen der Mediendatei stoppen, unterbrechen, weiterführen, an eine bestimmte Stelle vor oder zurück springen oder aber eine weitere Mediendatei aufrufen.

Die Mediendatenschnittstelle kann eine Anbindung an das Internet umfassen. Entsprechend kann der Benutzer die Mediendatei auch aus dem Internet, einem Cloud-Dienst oder einem Streaming-Dienst auswählen und/oder aufrufen.

Ein erfindungsgemässes Gebäudeautomationssystem umfasst ein Computerprogrammprodukt wie vorgängig geschildert und/oder eine Steuervorrichtung wie vorgängig beschrieben. Ein solches Gebäudeautomationssystem lässt insbesondere zu, dass bestimmte in das Gebäudeautomationssystem eingebundene Geräte von der Steuervorrichtung oder von einem Computerprogrammprodukt wie beschrieben in Abhängigkeit von aus einer Mediendatei extrahierter Informationen gesteuert werden.

Anhand eines Flussdiagrammes wird ein mögliches Ausführungsbeispiel der Erfindung im Folgenden näher erläutert.

Gezeigt wird ein erfindungsgemässes Verfahren anhand eines Flussdiagrammes am Beispiel eines zu backenden Kuchens. In einem ersten Schritt 1 wählt der Benutzer eine Mediendatei aus, welche das Backen eines Kuchens schrittweise erklärt. Hierzu teilt der der Benutzer der Steuervorrichtung mit, dass er einen Kuchen und welche Art von Kuchen er backen möchte. Dies kann beispielsweise über eine Spracheingabe erfolgen. Die Steuervorrichtung sucht dann über eine Medienschnittstelle ein entsprechendes Rezept. Es ist jedoch auch denkbar, dass der Benutzer diese Information konventionell über eine Tastatur eingibt oder direkt die entsprechende Mediendatei der Steuervorrichtung zur Verfügung stellt. Ausserdem kann der Benutzer seine Eingabe auch aus einem Rezeptbuch eingeben, indem er beispielsweise eine Fotographie des Rezeptes der Steuervorrichtung zur Verfügung stellt.

Im Schritt 2 wird die Steuervorrichtung mit ihrer Analyseeinheit die Mediendatei auf analysieren und die für die Steuerung der Geräte, beispielsweise ein Ofen, eine Teigknetmaschine, eine Waage, benötigten Informationen aus der Mediendatei extrahieren. Für diesen Analyse-Schritt kommen unterschiedliche Algorithmen wie Texterkennung, Bilderkennung, Spracherkennung, Gestenerkennung, Mimikerkennung usw. zum Einsatz.

Im Schritt 3 wird der Ablauf der Mediendatei gestartet. Im Falle einer Mediendatei in Form eines Instruktionsvideos wird das Video auf der Anzeigeeinheit dargestellt und gestartet. Sobald eine vom Benutzer auszuführende Arbeit ansteht oder ein Gerät angesteuert und eine Arbeit auszuführen hat, wird der Ablauf der Mediendatei bzw. des Videos unterbrochen. Im Beispiel des Kuchens werden die einzelnen Zutaten aufgeführt und der Benutzer aufgefordert, eine Schüssel auf die Waage zu stellen und die benötigten Zutaten in der entsprechenden Menge der Schüssel zuzugeben.

Im Schritt 4 wird die Steuervorrichtung bereits einen Befehl an den Ofen aussenden, um diesen auf die benötigte Temperatur vorzuheizen.

Im Schritt 5 ist die benötigte Arbeit vom Benutzer oder vom Gerät ausgeführt und es erfolgt eine Rückmeldung an die Steuervorrichtung. Diese Rückmeldung kann vom Benutzer oder direkt vom Gerät erfolgen. Im Falle des Zugebens der Zutaten meldet die Waage selbstständig das Gewicht an die Steuervorrichtung zurück.

Die beiden Schritte 4 und 5 können auch in umgekehrter Reihenfolge ablaufen, so dass die Rückmeldung von einem Gerät das Aussenden eines Befehls an ein weiteres Gerät auslöst.

Die Steuervorrichtung entscheidet im Schritt 6, ob der Ablauf der Mediendatei beendet ist, bzw. im vorliegenden Fall, ob der Kuchen schon fertig gebacken ist. Wenn der Kuchen fertig gebacken ist, wird das Verfahren beim Punkt 7 beendet.

Andernfalls wird im Schritt 8 von der Steuervorrichtung überprüft, ob ein weiterführen des Ablaufes der Mediendatei noch sinnvoll ist. Üblicherweise ist ein Weiterführen sinnvoll, so dass wiederum zum Schritt 3 gesprungen wird und die Mediendatei weiter bis zur nächsten benötigten Arbeit abgespielt wird.

Es folgt nun die Instruktion an den Benutzer, dass die Schüssel in die Teigknetmaschine eingegeben werden muss, worauf diese mit der aus der Mediendatei extrahierten Information, z.B. Geschwindigkeit und Zeit, die Zutaten zu einem Teig verrührt. Sobald ein homogener Teig vorhanden oder die eingestellte Zeit abgelaufen ist, erfolgt wiederum eine Rückmeldung an die Steuervorrichtung. Der Kuchen ist noch nicht fertig gebacken und ein Weiterfahren ist sinnvoll. Es erfolgt wieder der Sprung zum Schritt 3.

Die Mediendatei wird weiter abgespielt und der Benutzer instruiert, dass der Teig in die Kuchenform gefüllt werden muss. Sobald der Benutzer die ausgeführte Arbeit bestätigt erfolgen wiederum die beiden Entscheidungen 6, 8 und der Rücksprung zum Schritt 3.

Die Steuervorrichtung lässt die Mediendatei weiter ablaufen und instruiert den Benutzer sofern der Ofen genügend vorgeheizt ist, die Kuchenform in den Ofen zu schieben. Hierzu wird der Ofen angesteuert, so dass dieser die Tür automatisch öffnet und der Benutzer die Form einlegen kann. Das Schliessen der Ofentür wird vom Ofen zurückgemeldet ebenso wie die Meldung, dass der Kuchen im Ofen platziert ist. Entsprechend wird wieder zum Schritt 3 gewechselt und benötigte Backzeit an den Ofen übermittelt.

Falls der Benutzer fälschlicherweise die befüllte Kuchenform nicht in den Ofen gestellt sondern lediglich die Ofentür geschlossen hat, kann der Ofen eine Rückmeldung 5 an die Steuereinheit geben. Es wird überprüft, ob der Ablauf weiter sinnvoll ist. Da dies der Fall ist, wird wiederum zum Schritt 3 gewechselt und dem Benutzer nochmals die Sequenz mit der Instruktion zum Einschieben der Backform in den Ofen abgespielt. Die Ofentür wird geöffnet, der Benutzer schiebt den Kuchen tatsächlich in den Ofen, schliesst die Tür und die Backzeit erneut eingestellt.

Falls sich der Benutzer bei einem Arbeitsschritt komplett falsch verhält und der weitere Ablauf nicht mehr sinnvoll ist, wird zum Schritt 1 gesprungen und die Steuervorrichtung sucht und wählt eine Mediendatei zur Behebung des Problems. Beispielsweise kann der Benutzer zu viel Mehl den Zutaten zugegeben haben. Entsprechend wird eine Mediendatei für die Verwendung der zugegebenen Menge Mehl gesucht und ausgewählt.

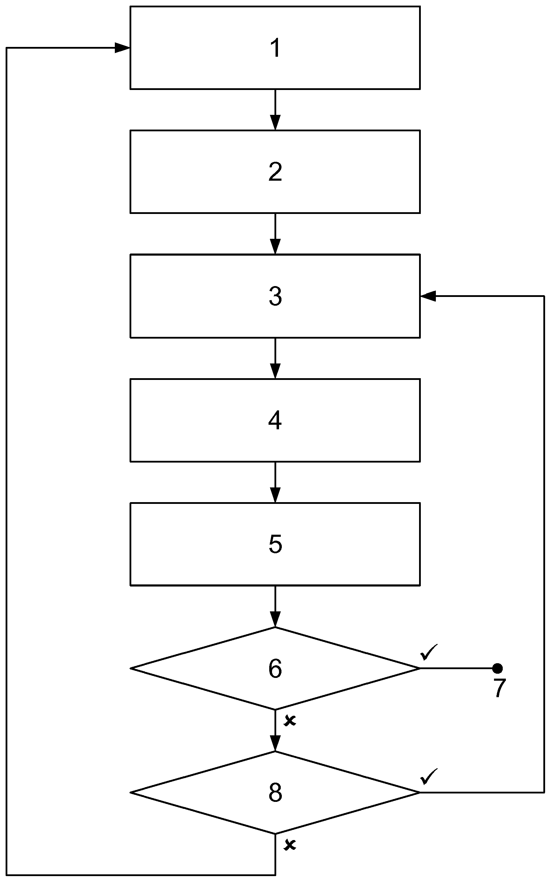

## Patentansprüche

1. Verfahren zum Steuern wenigstens eines in ein Gebäudeautomationssystem eingebundenen Gerätes mit einer Steuervorrichtung umfassend die Schritte:
- Auswahl und/oder Aufruf einer Mediendatei (1) durch einen Benutzer,
- Analyse der Mediendatei und Extraktion (2) von für die Steuerung relevanten Informationen aus der Mediendatei durch Auswerten von Audiodaten und/oder Videodaten und/oder Textdaten der Mediendatei,
- Aussenden von Steuerbefehlen (4) an das wenigstens eine Gerät auf Basis der aus der Mediendatei extrahierten Informationen.

2. Verfahren nach Anspruch 1, **dadurch gekennzeichnet, dass** das Gerät der Steuervorrichtung Rückmeldungen, insbesondere zu seinem Status, gibt.

3. Verfahren nach Anspruch 2, **dadurch gekennzeichnet, dass** die Steuervorrichtung aufgrund der Rückmeldungen vom Gerät den Ablauf der Mediendatei steuert.

4. Verfahren nach Anspruch 3, **dadurch gekennzeichnet, dass** die Steuerung des Ablaufs der Mediendatei einen oder Kombinationen der folgenden Schritte umfasst:
- Stoppen des Ablaufs,
- Vorspringen im Ablauf an eine bestimmte Stelle,
- Rückspringen im Ablauf an eine bestimmte Stelle,
- Unterbrechen des Ablaufs,
- Weiterführen des Ablaufs,
- Auswahl und/oder Aufruf einer weiteren Mediendatei.

5. Verfahren nach einem der Ansprüche 1 bis 4, **dadurch gekennzeichnet, dass** die Analyse der Mediendatei (2) im Wesentlichen in Echtzeit erfolgt.

6. Verfahren nach einem der Ansprüche 1 bis 4, **dadurch gekennzeichnet, dass** die Analyse der Mediendatei (2) unabhängig vom Ablauf der Mediendatei für den Benutzer erfolgt.

7. Verfahren nach einem der Ansprüche 1 bis 6, **dadurch gekennzeichnet, dass** zur Analyse der Mediendatei und zur Extraktion der Informationen (2) Zusatzinformationen, insbesondere Metadaten, Tags, Schlagworte, ausgewertet werden.

8. Verfahren nach einem der Ansprüche 1 bis 7, **dadurch gekennzeichnet, dass** das Aussenden der Steuerbefehle (4) an das wenigstens eine Gerät über das Gebäudeautomationssystem erfolgt.

9. Computerprogrammprodukt für die Gebäudeautomation, das, wenn es auf einem Computer ausgeführt wird, Informationen aus einer Mediendatei extrahiert durch Auswerten von Audiodaten und/oder Videodaten und/oder Textdaten der Mediendatei, um auf Basis der extrahierten Informationen wenigstens ein Gerät in einem Gebäudeautomationssystem steuern zu können, insbesondere in einem Verfahren nach einem der Ansprüche 1 bis 8.

10. Computerprogrammprodukt nach Anspruch 9, **dadurch gekennzeichnet, dass** zur Extraktion der Informationen (2) Zusatzinformationen der Mediendatei, insbesondere Metadaten, Tags, Schlagworte, ausgewertet werden.

11. Steuervorrichtung, insbesondere für ein Verfahren nach einem der Ansprüche 1 bis 8, zum Steuern wenigstens eines in ein Gebäudeautomationssystem eingebundenen Gerätes umfassend eine Mediendatenschnittstelle, Bedienelemente oder Anschlusselemente zu einem Bedienelement für einen Benutzer zum Auswählen und/oder Aufrufen einer Mediendatei (1), eine Anzeigeeinheit oder Anschlusselemente zu einer Anzeigeeinheit zum Anzeigen der ausgewählten Mediendatei, eine Analyseeinheit oder Anschlusselemente zu einer Analyseeinheit, insbesondere mit einem Computerprogrammprodukt nach Anspruch 9 oder 10, zum Analysieren und Extrahieren von Steuerinformationen (2) aus der Mediendatei durch Auswerten von Audiodaten und/oder Videodaten und/oder Textdaten der Mediendatei, und eine Schnittstelle zu einem Gebäudeautomationssystem.

12. Steuervorrichtung nach Anspruch 11, **dadurch gekennzeichnet, dass** die Schnittstelle zum Gebäudeautomationssystem unidirektional oder bidirektional ausgebildet ist.

13. Steuervorrichtung nach Anspruch 11 oder 12, **dadurch gekennzeichnet, dass** die Mediendatenschnittstelle eine Anbindung an das Internet aufweist.

14. Gebäudeautomationssystem umfassend ein Computerprogrammprodukt nach Anspruch 9 oder 10 und/oder eine Steuervorrichtung nach einem der Ansprüche 11 bis 13.

## Claims

1. Method for controlling at least one device integrated in a building automation system with a control device comprising the steps:
- Selection and/or calling of a media file (1) by a user,
- Analysis of the media file and extraction (2) of information relevant for the control from the media file by evaluating audio data and/or video data and/or text data of the media file,
- sending control commands (4) to the at least one device on the basis of the information extracted from the media file.

2. Method according to claim 1, **characterised in that** the device provides feedback to the control device, in particular on its status.

3. Method according to claim 2, **characterised in that** the control device controls the flow of the media file on the basis of the feedback from the device.

4. Method according to claim 3, **characterized in that** controlling the flow of the media file comprises one or combinations of the following steps:
- stopping the sequence,
- skipping forward in the sequence to a certain position,
- jumping back in the sequence to a specific position,
- interrupting the sequence,
- continuing the sequence,
- selecting and/or calling up another media file.

5. Method according to any one of claims 1 to 4, **characterized in that** the analysis of the media file (2) is performed substantially in real time.

6. Method according to any one of claims 1 to 4, **characterized in that** the analysis of the media file (2) takes place independently of the running of the media file for the user.

7. Method according to one of claims 1 to 6, **characterised in that** additional information, in particular metadata, tags, keywords, is evaluated for analysing the media file and for extracting the information (2).

8. Method according to any one of claims 1 to 7, **characterised in that** the sending of the control commands (4) to the at least one appliance takes place via the building automation system.

9. A computer program product for building automation which, when executed on a computer, extracts information from a media file by evaluating audio data and/or video data and/or text data of the media file in order to be able to control at least one device in a building automation system on the basis of the extracted information, in particular in a method according to any of claims 1 to 8.

10. Computer program product according to claim 9, **characterised in that**, in order to extract the information (2), additional information of the media file, in particular metadata, tags, keywords, is evaluated.

11. Control device, in particular for a method according to one of the claims 1 to 8, for controlling at least one device integrated in a building automation system, comprising a media data interface, operating elements or connection elements to an operating element for a user for selecting and/or calling up a media file (1), a display unit or connection elements to a display unit for displaying the selected media file, an analysis unit or connection elements to an analysis unit, in particular with a computer program product according to claim 9 or 10, for analysing and extracting control information (2) from the media file by evaluating audio data and/or video data and/or text data of the media file, and an interface to a building automation system.

12. Control device according to claim 11, **characterised in that** the interface to the building automation system is unidirectional or bidirectional.

13. Control device according to claim 11 or 12, **characterised in that** the media data interface has a connection to the Internet.

14. A building automation system comprising a computer program product according to claim 9 or 10 and/or a control device according to any one of claims 11 to 13.

## Revendications

1. Procédé de commande d'au moins un dispositif intégré dans un système d'automatisation de bâtiment avec un dispositif de commande comprenant les étapes suivantes :
- Sélection et/ou appel d'un fichier multimédia (1) par un utilisateur,
- Analyse du fichier média et extraction (2) d'informations pertinentes pour la commande à partir du fichier média en évaluant les données audio et/ou les données vidéo et/ou les données textuelles du fichier média,
- Envoyer des commandes de contrôle (4) à l'au moins un dispositif sur la base des informations extraites du fichier média.

2. Procédé selon la revendication 1, **caractérisé en ce que** le dispositif fournit un retour d'information au dispositif de commande, notamment sur son état.

3. Procédé selon la revendication 2, **caractérisé en ce que** le dispositif de commande commande le flux du fichier multimédia sur la base du retour d'information du dispositif.

4. Procédé selon la revendication 3, **caractérisé en ce que** le contrôle du flux du fichier média comprend une ou des combinaisons des étapes suivantes :
- Arrêt de la séquence,
- sauter en avant dans la séquence jusqu'à une certaine position,
- Revenir dans la séquence à une position spécifique,
- Interrompre la séquence,
- En continuant la séquence,
- Sélection et/ou appel d'un autre fichier multimédia.

5. Procédé selon l'une quelconque des revendications 1 à 4, **caractérisé en ce que** l'analyse du fichier média (2) est réalisée sensiblement en temps réel.

6. Procédé selon l'une quelconque des revendications 1 à 4, **caractérisé en ce que** l'analyse du fichier multimédia (2) a lieu indépendamment de l'expiration du fichier multimédia pour l'utilisateur.

7. Procédé selon l'une des revendications 1 à 6, **caractérisé en ce que** des informations supplémentaires, notamment des métadonnées, des balises, des mots-clés, sont exploitées pour l'analyse du fichier média et pour l'extraction des informations (2).

8. Procédé selon l'une des revendications 1 à 7, **caractérisé en ce que** l'envoi des ordres de commande (4) à l'au moins un dispositif est réalisé via le système d'automatisation du bâtiment.

9. Produit de programme informatique pour l'automatisation des bâtiments qui, lorsqu'il est exécuté sur un ordinateur, extrait des informations d'un fichier média en évaluant des données audio et/ou des données vidéo et/ou des données de texte du fichier média afin de pouvoir commander au moins un dispositif dans un système d'automatisation des bâtiments sur la base des informations extraites, en particulier dans un procédé selon l'une quelconque des revendications 1 à 8.

10. Produit de programme d'ordinateur selon la revendication 9, **caractérisé en ce que** des informations supplémentaires du fichier multimédia, en particulier des métadonnées, des balises, des mots-clés, sont évaluées pour l'extraction des informations (2).

11. Dispositif de commande, en particulier pour un procédé selon l'une des revendications 1 à 8, pour la commande d'au moins un appareil intégré dans un système d'automatisation de bâtiment, comprenant une interface de données média, des éléments de commande ou des éléments de connexion à un élément de commande pour qu'un utilisateur puisse sélectionner et/ou appeler un fichier média (1), une unité d'affichage ou des éléments de connexion à une unité d'affichage pour afficher le fichier média sélectionné, une unité d'analyse ou des éléments de connexion à une unité d'analyse, en particulier avec un produit de programme informatique selon la revendication 9 ou 10, pour analyser et extraire des informations de commande (2) du fichier média en évaluant des données audio et/ou des données vidéo et/ou des données de texte du fichier média, et une interface avec un système d'automatisation de bâtiment.

12. Dispositif de commande selon la revendication 11, **caractérisé en ce que** l'interface avec le système d'automatisation du bâtiment est unidirectionnelle ou bidirectionnelle.

13. Dispositif de commande selon la revendication 11 ou 12, **caractérisé en ce que** l'interface de données média a une connexion à l'Internet.

14. Système d'automatisation de bâtiment comprenant un produit de programme informatique selon la revendication 9 ou 10 et/ou un dispositif de commande selon l'une quelconque des revendications 11 à 13.
